# EUROPEAN PATENT SPECIFICATION

(11) **EP 4 441 457 B1**
(45) Date of publication and mention of the grant of the patent: **06.05.2026**
(21) Application number: 22829612.5
(22) Date of filing: 29.11.2022
(51) Int. Cl.: F28F 3/04, F28F 13/12

(54) **DISPERSANT PANEL FOR COOLING TOWER**
DISPERGIERPLATTE FÜR KÜHLTURM
PANNEAU DISPERSANT POUR TOUR DE REFROIDISSEMENT

(30) Priority: 01.12.2021 IT 202100030413
(43) Date of publication of application: 09.10.2024
(73) Proprietor: Axial Fans Int S.r.l., 21010 Besnate (VA) (IT); Di Massimo, Andrea, 64046 Montorio al Vomano (TE) (IT)
(72) Inventor: MOSIEWICZ, Roberto Eduardo, 21010 Besnate (VA) (IT); DI MASSIMO, Andrea, 64046 Montorio al Vomano (TE) (IT)
(74) Representative: Riccardi, Sergio
(86) International application number: PCT/IT2022/050306
(87) International publication number: WO 2023/100205

(56) References cited:
- EP-A1- 0 529 422
- WO-A1-2021/008143
- BE-A- 875 428
- US-A- 4 225 540

## Description

### FIELD OF THE INVENTION

The present invention relates to a dispersant panel for cooling tower of the kind recited in the preamble of the first claim. Such a panel is known from EP 0 529 422.

More particularly, the present invention relates to a dispersant panel capable of being so combined with other dispersant panels as to form a dispersant pack to be used in a common cooling installation of an evaporation cooling tower.

### DESCRIPTION OF PRIOR ART

It is well known that a cooling or evaporation tower substantially is a big gas-liquid heat exchanger, generally having the form of a cylinder or cone-frustum parallelepiped, wherein the liquid phase yields energy to the gaseous phase so as to reduce its temperature.

Moreover, the gaseous phase generally consists of air or steam, while the liquid phase consists of several kinds of water. The heat exchange may be done by contact between the phases, and in this case the tower is defined simply as an evaporation cooling tower. Otherwise the exchange may be carried out on a surface in a heat exchanger with pipes, plates or other means, and in this case the tower is defined as cooling bank. The most common types generally comprise the forced-circulation tower and the natural induced flow tower.

The forced-circulation tower, which is the most popular for cooling water, substantially consists of a case structure made of cement, metal or various plastics, provided at its base with openings for the circulation of air supplied by a fan; a system of water distribution, consisting of distribution nozzles and a generally plastic container; and a collection tank for the cooled water.

Sometimes the tower is provided with a tank for hot water returning from the process; in this case the hot water tank is provided with pumps returning water to the principal cooling tower.

On the contrary, the induced flow cooling towers make use of the water evaporation and the difference of density of the air - steam mixture. Thus, they may avoid use of a circulation fan, that clearly impacts the global cost of the system and the energy consumption.

These towers without fan are known as induced flow, natural circulation or natural draught towers, and have a characterizing shape with a vertical section consisting of a single pitch hyperboloid having a stack.

The natural induced flow towers are preferred for nuclear and geothermal power plants, where the high costs are justified, in view of the high air flow rates. In any case, the operative principle of the cooling towers is as follows.

Water dispersed in the tower upper part, thus falling downwards, is contacted by air induced to go up by the fan or by the difference od density. The contact is as closer as wider is the surface of water droplets contacted with air, that is the surface of exchange of matter. Therefore, there is a transfer of matter from the water droplets, constituting the dispersed phase, to air constituting the continuous phase, due to the humidification of said air, which is not steam saturated (this last condition being necessary for the tower operation). Through the transfer of matter, which is of the evaporative kind, water give energy to air in a substantially isothermal way for air, but with heat transfer and consequent water cooling. Therefore, water comes out from this exchange with a temperature lower than the inlet one. The above described thermal exchange is generally carried out with packs of thermal exchange or structured fillings, substantially consisting of a plurality of undulated and overlapped panels, configured to allow drainage of water droplets and their thermal exchange with air passing between the panels.

Similar panels are described in patent applications EP 0 529 422 A1, US 4 225 540 A and WO 2021/008142 A1.

These panels substantially are thermoformed sheets made of polymeric materials, generally PVC, characterized by reduced thickness and weight. The manufacture of these sheets or panels is generally carried out by means of conventional thermoforming and preferably vacuum plants.

Vacuum thermoforming substantially provides for a first clamping step, in which a polymeric sheet of predetermined dimensions is substantially constrained to a dimensionally suitable frame; a second step of heating the sheet for its preparation to a subsequent plastic deformation; and a low pressure suction step of the sheet against a mould defining the form of the shaping intended for said sheet.

Frequently, these shaped sheets are also subjected to a further cutting step, wherein the edges are substantially trimmed to obtain the finished piece, namely the actual panel to be combined with other panels to obtain the completed pack.

The above described prior art has some important drawbacks. More particularly, the finished panels made in this way, in view of the cut edges, have microfractures, that during the normal operation of the plant cause panel disaggregation in the form of microparticles or microplastics. These microplastics, as is well known, are small plastic particles, generally having a diameter between 330 microns and 5 mm, destined to be discharged from the plant, thus polluting seas and oceans. Their dangerousness for health of mankind and environment is proven by several scientific reports and the most serious damages are found more particularly in the aquatic and marine habitats. This happens especially in view of the fact that plastics need several years to be fully dissolved, and until they can be found in water, may be swallowed and accumulated in the body and tissues of many organisms.

Moreover, from a technical point of view, the known thermoforming plants allow to treat panels within dimensional limits defined by the constrained frame. Therefore, it is not possible to make panels of big dimensions and the realization times strongly depend from the number of employed machines and the rapidity of the thermoforming process.

Therefore, the thermal exchange packs produced with the known technologies are not made quickly, with a consequent increase of total times and costs, in view of substantially low efficiency of the above described manufacturing procedures.

### SUMMARY OF THE INVENTION

In this situation, the technical object on which the present invention is based, is to devise a dispersant panel for cooling tower capable of substantially getting round at least a part of the mentioned drawbacks.

In the frame of said technical object, an important target of the invention is to obtain a dispersant panel for cooling tower, which is totally devoid of microfractures, thus avoiding generation of dangerous microplastics.

Another important object of the invention is to make a dispersant panel that can be manufactures through quick processes, without particular dimensional limitations.

In conclusion, a further object of the invention is to make a dispersant panel that can be manufactured in an economically advantageous way.

The technical object and the mentioned targets are attained by a dispersant panel for cooling tower as recited in the annexed claim 1.

Preferred technical solutions are pointed out in the dependant claims.

### BRIEF DESCRIPTION OF THE DRAWINGS

The characteristics and the advantages of the invention are hereinafter explained by the detailed description of preferred embodiments of the invention, with reference to the accompanying drawings, in which:
Fig. 1 is a perspective view of a dispersant panel for cooling tower according to the invention;
Fig. 2 is a simplified diagram of the structure of a dispersant panel for cooling tower of the invention;
Fig. 3 is a perspective view of a panel forming device according to the invention;
Fig. 4 is a perspective view of the device of Fig. 3, wherein the side plates were removed at a side of the die and counterdie;
Fig. 5 is a front view of the device of Fig. 4;
Fig. 6 shows a diagrammatic front view of Figures 3 - 5;
Fig. 7a is a diagrammatic view of part of a device forming the panel, during the forming operation of a panel when forming a strip of corrugated sheet, where the bending station is also shown;

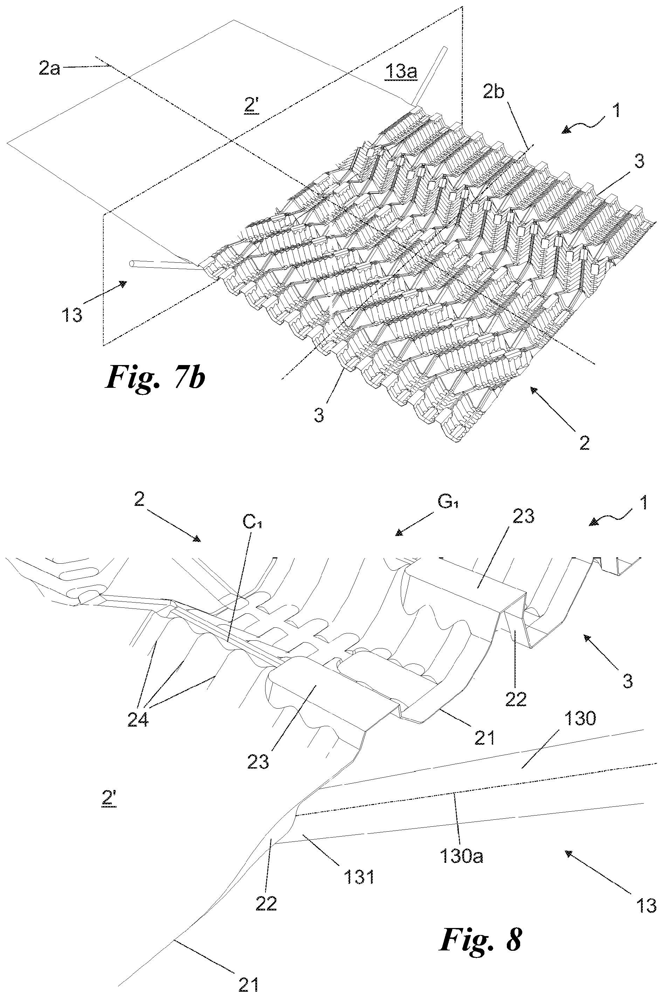

Fig. 7b is a diagrammatic view of a strip of corrugated sheet, for making a dispersant panel for cooling tower of the invention, where the bending station is also shown;
Fig. 8 shows a detail of the bending phase of a strip formed as a corrugated sheet, where it is clearly shown that the strip portion forms the edge, once pressed on the sheet during the forming operation;

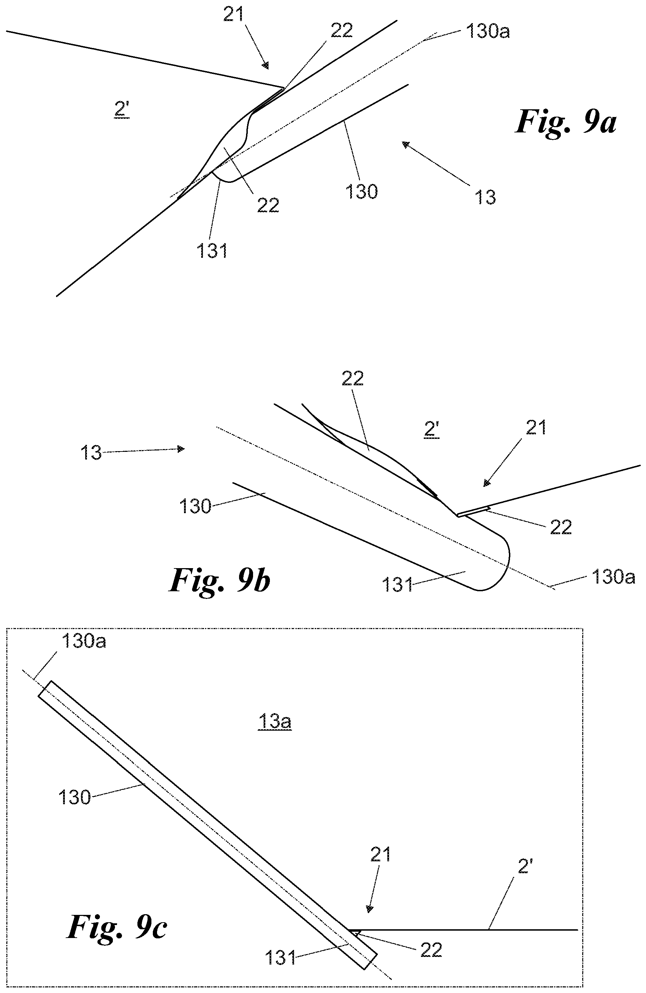

Fig. 9a is a detailed rear view of the bending phase of a strip;
Fig. 9b is a detailed front view of the bending phase of the strip of Fig. 9a;
Fig. 9c is a detailed lateral view of the bending phase of the strip of Figs. 9a - 9b;
Fig. 10a shows a perspective view of a track defining part of the printing surface of a panel forming device according to the invention;
Fig. 10b shows a front view of the track of Fig. 10a; and
Fig. 11 is a functional diagram of a system for producing draining panels, comprising a panel thermoforming installation according to the invention.

### DESCRIPTION OF THE PREFERRED EMBODIMENTS

In this document, measures, values, forms and geometrical references (such as verticalness and parallelism), when associated with such terms as "about" or other similar terms like "almost" or "substantially", should be understood except for measurement errors or inaccuracies due to production and/or manufacture, and above all for a slight deviation of the value, measure, form or geometrical reference associates therewith. For instance, these terms, when associated with a value, preferably mean a deviation not greater than 10% of the value.

Moreover, when used, terms such as "first", "second", "higher", "lower", "main" and "secondary" do not necessarily identify an order, a priority of relation or corresponding position, but may be merely used to distinguish different components more clearly from each other.

Unless where specified otherwise, as it will be apparent hereinafter, terms such as "treatment", "informatics", "determination", "calculation" and the like, refer to the action and/or process of a computer or similar device of electronic calculation manipulating and/or transforming data represented as physical ones, such as electronic magnitudes of an informatic system and/or memory, into other data likewise represented as physical quantities inside informatic systems, registers or other devices of storage, transmission or display of data.

The measurements and data reported in the present disclosure are to be considered, unless where otherwise stated, as carried out under the ICAO International Standard Atmosphere (ISO 2533:1975).

With reference to the figures of the drawings, the dispersant panel for cooling tower of the invention is overall indicated with reference number 1.

The panel 1 substantially is a geometric tridimensional element. Wherein two dimensions are predominant in respect of the third one. More particularly, preferably the panel 1 is defined by a lower thickness when compared with length and width considered on a plane.

Generally, panel 1 is substantially the product of forming or thermoforming a band 2'. Band 2' is a flat element of low thickness, preferably extending along a longitudinal direction 2a.

The longitudinal direction 2a substantially is the direction along which band 2' is extended and may be rolled up. Band 2' preferably defines also a transversal direction 2b which is perpendicular to the longitudinal direction 2a. Therefore, the transversal direction 2b substantially is the direction defining the width of band 2', while the longitudinal direction 2a is the direction defining the length of band 2'.

Moreover, band 2' defines two ends 21. The ends 21 preferably are the opposite ends of the longitudinal direction 2a and are also opposite along the transversal direction 2b and are defined by the lateral borders of band 2'.

As already stated, panel 1 is the product of the deformation of band 2'. This deformation may be done with any known technology, for instance by forming or thermoforming by means of a preformed press defining a die and counterdie configured with the for the form intended to be given to the band 2' to make the panel 1. However, other specific technologies may be used, as it will be better explained hereinafter.

In the preferred embodiment of the invention, band 2' is being deformed so as to obtain a corrugated sheet. Therefore, panel 1 in its preferred embodiment preferably comprises the corrugated sheet 2.

Sheet 2 preferably extends between a first plane 1a and a second plane 1b. Planes 1a and 1b are mutually parallel and moreover they substantially define virtual planes licked by sheet 2 and substantially including the maximum and minimum zones of sheet 2. Indeed, it is well known that an undulated geometrical element extends along a predetermined direction, at the same time crossing in turn maximum and minimum points.

The first plane 1a and the second plane 1b are also preferably parallel to the longitudinal direction 2a. Clearly, as sheet 2 is the result of the deformation of band 2', it extends too along the longitudinal direction 2a, waving on it. Moreover, also sheet 2 comprises or defines two ends 21 along the transversal direction 2b in respect of the longitudinal direction 2a. With further detail, sheet 2 defines wave forms 20.

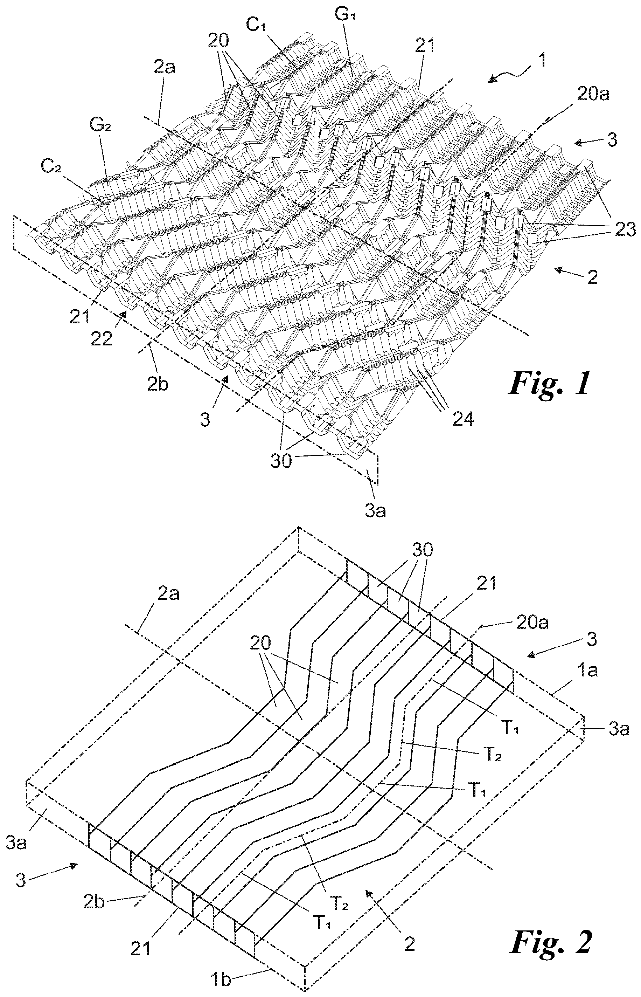

Wave forms or borders 20 are the forms for the extension of the undulation in the direction of extension of panel 1. Therefore, the wave forms 20 are recurring along the longitudinal direction 2a. Moreover, the wave forms may extend along a wave path 20a. The wave path 20a is substantially transverse to the longitudinal direction 2a. In view of this, the wave path 20a may be rectilinear or preferably not rectilinear, as clearly shown in Figures 1-2.

In the preferred embodiment, wave forms 20 extend all along wave paths 20a transverse to the longitudinal direction 2a. Moreover, these wave paths 20a are preferably not rectilinear.

For example, wave path 20a may comprise in succession at least a first length T₁ and a second length T₂.

The first length T₁ is preferably rectilinear and parallel to the transversal direction 2b or perpendicular to the longitudinal direction 2a, whereas the second length T₂ is substantially rectilinear and transversal to both the transversal direction 2b and the longitudinal direction 2a. In other words, length T₂ is a skew piece.

With a further detail, in the preferred embodiment, shown by way of example in Figure 1 and diagrammatically in Figure 2, the wave path 20a comprises, successively between the ends 21, a first length T₁, a second length T₂, a first length T₁, a second length T₂ and a further first length T₁.

Preferably, the first lengths T₁ adjacent to the ends 21 are mutually aligned. Consequently, this means that the wave path 20a extends along the longitudinal direction 2a in the central part i.e. between the ends 21 of sheet 2, and returns to its transversal direction at the ends 21 of sheet 2.

Of course, the first lengths T₁ adjacent to ends 21 might also not be aligned, and the wave path 20a may be extended sidelong the longitudinal direction 2a.

Considering the extension transversal to planes 1a, 1b, the wave paths 20a may define some particular characteristics. Preferably, each wave path 20 comprises a first bulge G₁ and a second bulge G₂. More particularly, the first bulge G₁ extends along each first length T₁ and the second bulge G₂ extends along each second length T₂. These bulges G₁, G₂ are merely zones defining concavities. Preferably the bulges G₁, G₂ define mutually opposite concavities. This means that if the concavity of the first bulge G₁ is turned to the second plane 1b, then the concavity of the second bulge G₂ is turned to first plane 1a or vice versa.

In addition to the above description, preferably the first bulge G₁ defines a first top C₁. The first top C₁ extends either on the first plane 1a or on the second plane 1b. Moreover, the first top C₁ extends parallel to the first length T₁, while the second bulge G₂ defines a second top C₂. The second top C₂ extends either on the first plane 1a or on the second plane 1b.

Preferably, the second top C₂ extends on the first plane 1a if the first top C₁ extends on the second plane 1b, or the second top C₂ extends on the second plane 1b if the first top C₁ extends on the first plane 1a. Preferably, the second top C₂ extends parallel to the second length T₂. Therefore, the tops C₁, C₂ are the maximum or minimum zones, respectively, of the bulges G₁, G₂ of each wave path 20.

The first top C₁ and/or the second top C₂ may additionally comprise an interface surface 23. If present, the interface surface 23 is a plain, preferably smooth zone, defining a greater extension along the longitudinal direction 2a than the tops C₁, C₂. Thus, the interface surface 23 is suitable to be put in contact with the interface surface 23 of another panel 1.

In this way, it is possible to match efficiently a plurality of panels 1 to obtain a drainage pack comprising a plurality of panels 1, particularly efficient according to the preferred embodiment.

In order to improve the panel and pack efficiency, allowing during drainage the thermal exchange and cooling of the liquid, as it happens typically in the cooling towers, the panel may comprise further moves.

More particularly, each bulge G₁, G₂ may comprise a plurality of ribs 24. When present, the ribs 24 extend transversally to the first length T₁ and the second length T₂, respectively. Therefore, these ribs 24 are convex or concave portions of sheet 2, allowing to increase the surface of thermal exchange of the corrugated sheet and consequently of the global panel 1 or a drainage pack comprising a plurality of panels.

Clearly, when the panels 1 are coupled to make a pack, they are superimposed successively, for instance by causing a first plane 1a of a panel 1 to coincide with the second plane 1b of an adjacent panel 1 and vice versa. Moreover, the junction zones may be made artificially, or it is possible to utilize the interface surfaces 23, when present, for instance by mutually gluing the interface surfaces 23 of some panels 1.

In any case, panel 1 is provided with edges 3. Edges 3 preferably extend parallel to the longitudinal direction 2a at the ends 21. Obviously, in view of the undulatory geometry of sheet 2, the edges 3 are not rectilinear, but they too move along non-rectilinear paths. Indeed, each edge 3 defines at both ends 21 profiles 30. Still more in detail, profiles 30 are defined for each wave form 20. Therefore, also the profiles 30 are recurrently parallel to the longitudinal direction 2a. More particularly, profiles 30 are developed on a tangential plane 3a. The tangential plane 3a is at right angles with the transversal direction 2b, then parallel to the longitudinal direction 2a.

Moreover, advantageously, the edges 3 are made by a rim 22 of sheet 2, thus also of band 2', folded on said sheet 2 or band 2', at the end 21. Rim 22, which is a part of band 2' before the forming phase, and the part of the sheet 2 after the forming phase giving the undulatory shape to band 2' to sheet 2, may be a strip of band 2' or sheet 2 at each end, defining a reduced thickness, for instance between 1 mm and 1 cm.

Each rim 22 forming the edges 3 is then advantageously folded on sheet 2 or band 2' without gaps. Thus, there are no points of singularity or irregularity on the edge 3 that may lead to subsequent fractures.

As already stated, panel 1 may be made with any forming device or installation, or the panel 1 may be made by a specific forming device or thermoforming installation.

With reference to the figures of the drawings, the thermoforming installation for the panel according to the invention is globally indicated with the reference numeral 10.

Therefore, the thermoforming installation 10 is preferably suitable to allow production of panel 1 of the invention in its preferred embodiment. However, the installation 10 might also be suitable to make panels of different kind, that is different from panel 1.

Briefly, the thermoforming installation 10 comprises at least conveyance means, a heating station 11 and a forming apparatus. The conveyance means are configured to convey band 2' in the longitudinal direction 2a. Therefore, the conveyance means are substantially configured to define a conveyance path along which the band 2' is extended and moved for its production. For example, the conveyance means may comprise a reel 14. The reel 14 may comprise the band 2' rolled up. Moreover, reel 14 when provided, is preferably arranged upstream the heating station 11.

The conveyance means may comprise also one or more transmission means 15. The transmission means 15 preferably are intermediate elements arranged at least between reel 14 and the forming apparatus. Clearly, transmission means 15 may comprise simple rollers on which, the band 2' is running, defining a path in the longitudinal direction 2a. However, the transmission means 15 may also comprise tensioning devices, configured for tensioning locally band 2' to keep it spread and avoid laps at least when the band 2' reaches the forming apparatus.

The heating station 11 is configured to heat band 2'. More particularly, the heating station 11 is configured to heat the band 2' with a quantity of heat sufficient to make it deformable. Obviously, such a quantity of heat is different according to the kind of material. Preferably, the band 2' consists of polymeric material, for instance PVC, so that the heating station 11 is capable of developing sufficient heat to make machinable the material, even when compared with the total thickness of band 2'.

Obviously, the parameters to be defined for the heating station 11 are known per se by a skilled technician, who can surely discern the required amount of heat according to the kind of material and its thickness.

The heating station 11 moreover is a kind of oven defining a charging door and an outlet, arranged along the longitudinal direction 2a, so that the band 2' can enter through the charging door and go out through the outlet, after passing by heat exchangers, such as incandescent resistors, hot air jets or other. Also the typical structure of the heating stations is known per se to a man skilled in this art.

The forming apparatus is arranged downstream the heating station 11. The forming apparatus is generally fitted to receive the band 2' along the longitudinal direction 2a. Moreover, the forming apparatus is configured to form the band 2' pressing it between die and counterdie so as to produce a panel like panel 1.

Therefore, the forming apparatus comprises at least a counterdie. The forming apparatus may comprise a vacuum chamber including the counterdie and may be configured to receive the band 2' along the longitudinal direction 2a and press the band 2' on the counterdie 6.

In turn, the forming apparatus may also comprise a die and be configured to form the band 2' and make a panel, by pressing mechanically the band 2' between die and counterdie. Of course, also in this case a man skilled in this art knows the great number of technologies that can be adopted to heat form a band 2' or a plate or slab.

Therefore, the forming apparatus may include at least a counterdie, possibly even a die countershaped to the counterdie, configured to allow the production of a panel of any form or a panel 1 of the invention.

As above mentioned, the forming apparatus might be a conventional apparatus, for instance as hereinbefore described, or a specific forming apparatus.

With reference to the figures of the drawings, the panel forming apparatus of the invention is globally depicted with reference numeral 4.

The apparatus 4 may be equally used in the thermoforming installation 10, or in any other thermoforming installation, namely having different features, for instance different conveyor means, different heating station 11 or others.

The forming apparatus 4, like the thermoforming installation 10, is preferably adapted to allow production of the panel according to the invention, more particularly in the preferred embodiment; however, the forming apparatus 4 might also be adapted to make panels of different form, i.e. different from panel 1.

Apparatus 4 is fitted to receive the band 2' along the predetermined direction 2a. Moreover, apparatus 4 preferably comprises in few words a die 5 and a counterdie 6. Advantageously, die 5 and counterdie 6 have some important features.

The die 5 preferably comprises a plurality of first tracks 50. The first tracks are elongated elements, which when used extend parallel to the direction 2b transversal to the band 2'. Therefore, the first tracks 50 are movable along a first path 5a.

The first path 5a substantially is the path along which the first tracks 50 are moved in respect of a fixed reference system, for instance the soil or another component of a forming or thermoforming installation, or even of the same apparatus 4, like for instance a structural frame on which die 5 and counterdie 6 are fixed.

The first path 5a may be open, for instance even rectilinear. Otherwise, the first path 5a may be closed. Preferably, the first path 5a is closed, so that the first tracks 50 may cyclically return to the same positions. Moreover, the first path 5a may have a particular form, depending from the structure of the motion mechanism of the first tracks 50.

Preferably, the first path 5a has an almost elliptical form, for instance comprising two semi-circular portions jointed by rectilinear sections. Therefore, the first tracks 50 are arranged in succession so as to make a first forming surface 51. The first forming surface 51 is substantially a surface configured to give the intended shape to band 2' obtaining the deformed sheet of a panel, for instance like the undulated sheet 2 of panel 1.

Preferably, the first forming surface 51 is defined as corresponding at least to a first segment s' of the first path 5a. The first segment s' is preferably a rectilinear portion of the first path 5a. Therefore at least in the first segment s', the first tracks 50 are mutually aligned in contact, thus adjacent so as to form as a whole the first forming surface 51. Therefore, the first forming surface 51 consists of the whole of the forming surfaces of the side by side individual first tracks 50.

When the first path 5a is elliptical, the first segment s' may for instance correspond with a rectilinear portion connecting the semi-circular portions. The first segment s' is also preferably parallel to the longitudinal direction 2a. Therefore, the first printing surface 51 is distributed along the longitudinal direction so that, when the die 5 presses the band 2' transversally to the longitudinal direction 2a, the shape of the first forming surface 51 is transmitted to the band 2'.

Preferably, the die 5 is operative as opposed to counterdie 6. Therefore, also the latter has features which are similar or even identical to die 5. Indeed counterdie 6 preferably comprises a plurality of second tracks 60. The second tracks 60 are elongated elements, when used extending parallel to the transversal direction 2b in respect of band 2'. Therefore, the second tracks 60 define special forms to be locally given to band 2'.

Therefore, the second tracks 60 are movable along a second path 6a. The second path 6a substantially is the path on which the second tracks 6o are moved in respect of a fixed reference system, for instance the ground or another component of a forming or thermoforming installation, or even the same apparatus 4 like for example a structural frame on which die 5 and counterdie 6 are bound.

The second path 6a may be open, for instance even rectilinear. Otherwise, the second path 6a may be closed. Preferably, the second path 6a is closed, so that the second tracks 60 may cyclically return to the same positions. Moreover, the second path 6a may take a particular shape, depending from the structure of the movement mechanism of the second tracks 60.

Preferably, the second path 6a defines an almost elliptical shape, for example comprising two semi-circular portions connected by rectilinear parts. The second tracks 60 are then arranged in succession so as to form at least a second forming surface 61. The second forming surface 61, like the first forming surface 51. Is substantially a surface configured to give a desired shape to band 2' to obtain a formed sheet of a panel, for instance like the corrugated sheet 2 of panel 1.

Preferably the second forming surface 61 is defined with at least a second segment s" of the second path 6a. The second segment s" preferably is a rectilinear portion of the second path 6a. Therefore, at least for the second segment s", the second tracks 60 are mutually aligned, in contact and then adjacent, so as to form altogether the second forming surface 61. Therefore, the second forming surface 61 consists of the whole of the forming surfaces of the side by side second tracks 60.

If the second path 6a is elliptical, the second segment s" may for instance correspond with a rectilinear part of connection between semi-circular portions. The second segments s" is also preferably parallel to the longitudinal direction 2a. Therefore, the second forming surface 61 is arranged along the longitudinal direction so that, when the counterdie 6 is pressing the band 2' transversally to the longitudinal direction 2a, the shape of the second forming surface 61 is transmitted to the band 2'.

Therefore, the second forming surface 61 has preferably a shape reverse to the first forming surface so that the forming surfaces 51, 61 jointly define a particular shape to be given to the band 2' to make a panel, for example like panel 1, when band 2' is formed like sheet 2. In other words, the second forming surface 61 is the negative of the first forming surface 51 or vice versa.

Therefore, die 5 and counterdie 6 may be substantially two elements which are substantially similar or identical and mirror images for band 2' or longitudinal direction 2a, excepting only the forming surfaces 51, 61 which are mutually complementary or countershaped.

As already noted, the tracks 50, 60 are movable. Preferably, apparatus 4 comprises first movement means 7 and second movement means 8. In substance, the first movement means 7 are configured to move the first tracks 50 along the first path 5a. The second movement means 8 are configured to move the second tracks 60 along the second path 6a.

Advantageously, the movement means 7, 8 are further configured to move the tracks 50, 60 at the same time in a coordinated way in the same direction at least for the segments s', s".

In other words, the tracks 50, 60 are moved, in view of the configuration of the movement means 7,8 preferably together, at the same speed, in the same direction, namely jointly for the segments s', s".

Advantageously, the segments s', s" are mutually facing so that the forming surfaces 51, 61 always interpenetrate pressing the band 2' inserted between die 5 and counterdie 6. At the same time, band 2' is moved along the longitudinal direction 2a through the forming surfaces 51, 61. Indeed the tracks 50, 60 are moved along the paths 5a, 6a pushing and at the same time compressing the band 2' in the longitudinal direction 2a. In this way, a panel, for instance panel 1, is being produced.

Moreover, if the paths 5a, 5b are closed, apparatus 4 defines an entry zone, wherein the tracks 50, 60 mutually converge advancing along the relevant paths 5a, 6a, and an exit zone, wherein the tracks 50, 60 mutually diverge, advancing along the relevant paths 5a, 6a. Between the entry zone and the exit zone, the tracks 50, 60 are advancing along the paths 5a, 6a, defining altogether interpenetrating forming surfaces 51, 61. Therefore, band 2' is substantially inserted in the entry zone, wherein the tracks 50,60 near the band 2' until they touch and then press it, when the tracks 50, 60 are side by side aligned defining the forming surfaces 51, 61. Then in the exit zone the tracks 50, 60 move away from sheet, for example sheet 2 obtained by deformation of band 2', allowing said sheet and then panel to move forward autonomously.

The movement means 7, 8 too may be mirror arranged in the longitudinal direction 2a. Moreover, they may comprise some particular components. For instance, the first movement means 7 may comprise a first transport mechanism 70.

The first transport mechanism 70 substantially defines the first path 5a. In the preferred but not exclusive embodiment of apparatus 4, in which the first path 5a is closed, the first transport mechanism 70 comprises two first gear wheels 70a and a first belt 70b. The first gear wheels 70a are preferably rotating and mutually spaced. The first belt 70b is moved by the first gear wheels 70a, more particularly around said gear wheels 70a, thus defining the first path 5a. The first belt 70b may be a single continuous e.g. monolithic piece or may include a discontinuous element, for instance a chain comprising a plurality of sequentially connected links. Preferably, the first belt 70b consists of a chain defining well known pins and links.

In the same way, the second movement means 8 may comprise a second transport mechanism 80. The second transport mechanism 80 substantially defines the second path 6a. In the preferred but not exclusive embodiment of apparatus 4, in which the second path 6a is closed, the second transport mechanism 80 comprises two second gear wheels 80a and a second belt 80b. The second gear wheels 80a are preferably rotating and mutually spaced. The second belt 80b is moved by the second gear wheels 80a, more particularly around said gear wheels 80a, thus defining the second path 6a. Even the second belt 80b may be a single continuous e.g. monolithic piece or may include a discontinuous element, for instance a chain comprising a plurality of sequentially connected links. Preferably, the second belt 80a consists of a chain defining well known pins and links.

The tracks 50, 60 then are preferably operatively connected with the first transport mechanism 70 and the second transport mechanism 80. In detail, preferably the gear wheels 70a, 80a are rotating in the same direction at the same speed.

The first tracks 50 may be directly connected with the first transport mechanism 70, for instance with the first belt 70b. Otherwise, the first movement means 7 may comprise a plurality of first driving elements 71. The first driving elements 71 are operatively connected with the first transport mechanism 70 in connection with the first path 5a. Moreover, each first driving elements 71 is preferably labile constrained with a corresponding first track 50. Likewise, the second tracks 60 may be directly connected with the second transport mechanism 80, for instance with the second belt 80b. Otherwise, the second movement means 8 may comprise a plurality of second driving elements 81. The second driving elements 81 are operatively connected with the second transport mechanism 80 corresponding to the second path 6a. Moreover, each second driving element 81 is preferably labile constrained with a corresponding second track 60.

If the belts 70b, 80b consist of chains, each first driving element 71 is labile constrained with a corresponding pin of the first belt 70b. Preferably this constraint is obtained by a hinge. Moreover, each second driving element 81 is labile constrained with a corresponding pin of the second belt 80b. Even in this case, the constraint is preferably obtained by a hinge.

The apparatus 4 may comprise some additional important features, which are not essential but useful to increase the efficiency of apparatus 4.

Advantageously, die 5 may comprise a first internal guide 52. The first internal guide 52 extends almost parallel to the first path 5a. If the first path 5a is closed, preferably the first internal guide 52 is arranged inside the first path 5a.

Then, each first driving element 71 may comprise a first internal slider 71a. The first internal slider 71a is preferably labile constrained with the first internal guide 52 and it is mobile along said first internal guide 52. Likewise, counterdie 6 may comprise a second internal guide 62. The second internal guide 62 may be extended substantially parallel to the second path 6a. If the second path 6a is closed, preferably the second internal guide 62 is arranged inside the second path 6a.

Then, each second driving element 81 may comprise a second internal slider 81a. The second internal slider 81a is preferably labile constrained with the second internal guide 62 and is also mobile along the second internal guide 62.

The internal guides 52, 62 may be simple trackings or lines, on which the internal sliders 71a, 81a may be moved. For instance, the internal guides 52, 62 may be defined on lateral plates arranged beside the tracks 50, 60 and integral with the structural frame of apparatus 4.

The internal sliders 71a, 81a may be pins or cylinders to be inserted into the internal guides 52, 62 so as to move along predetermined trajectories.

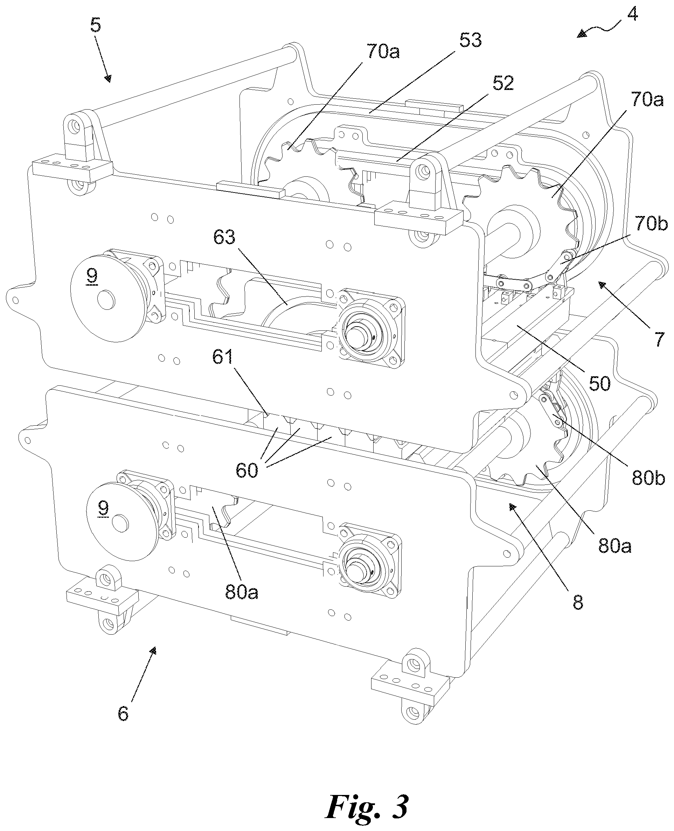

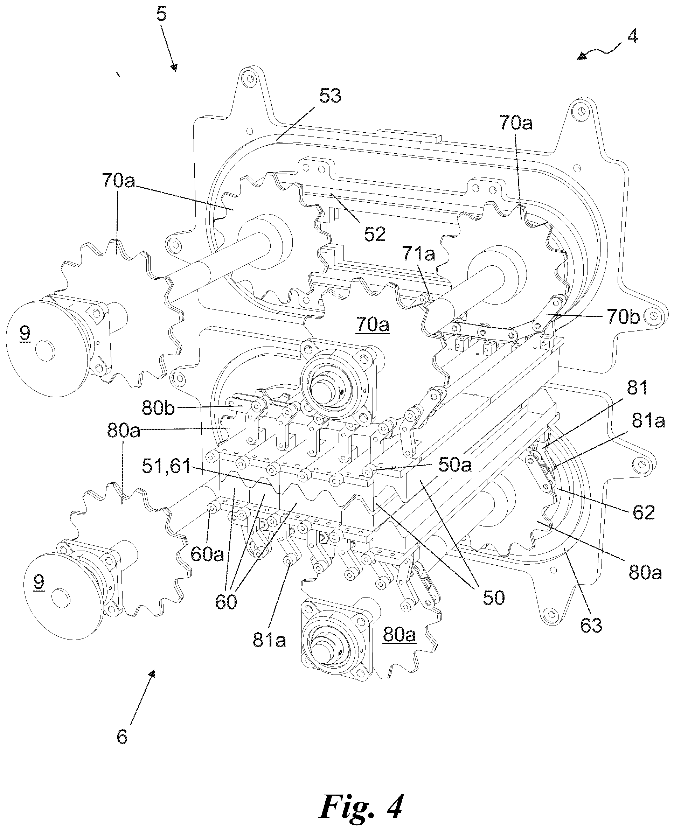

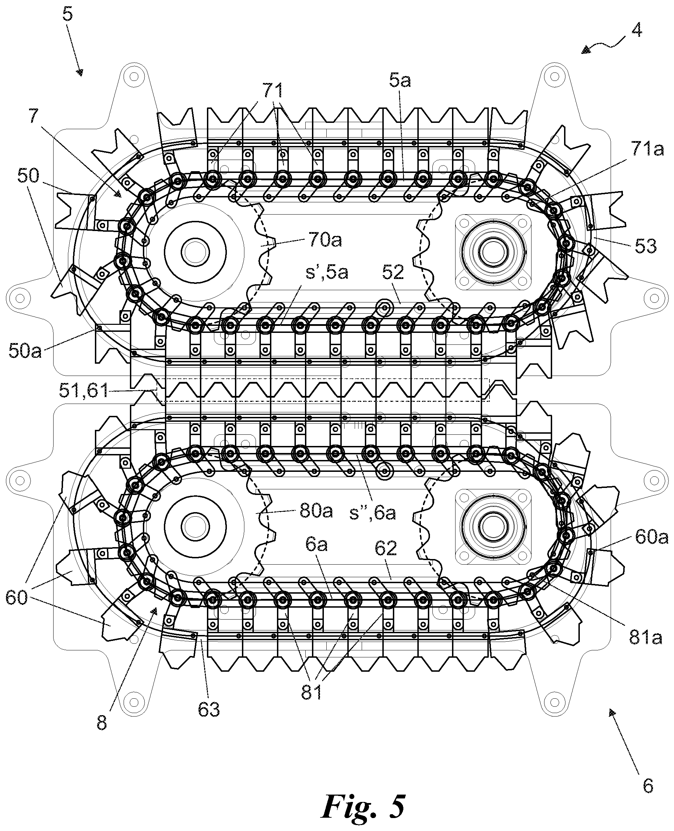

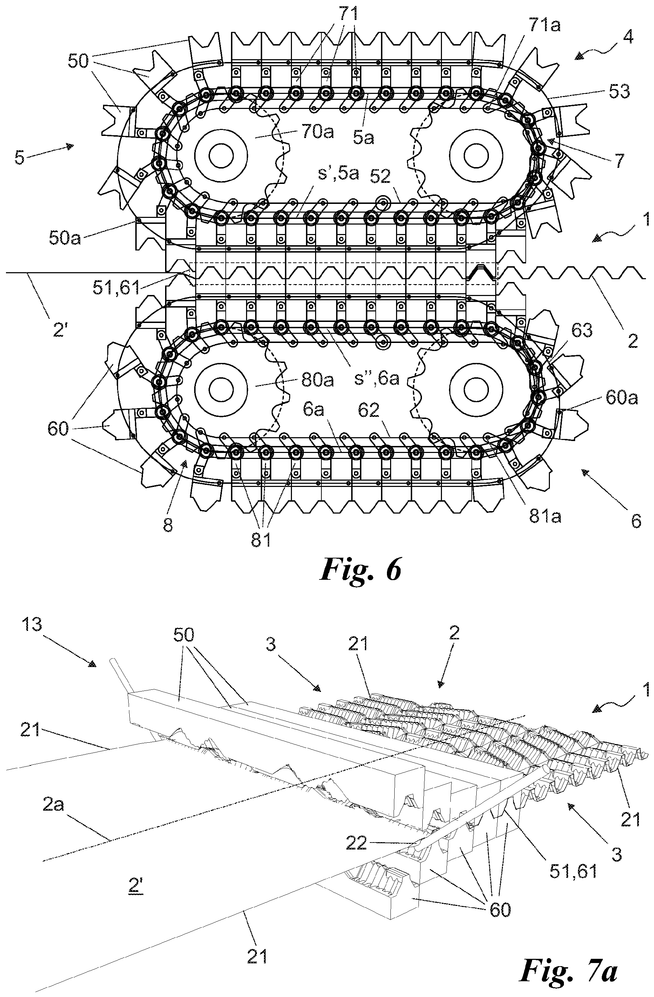

It is also important to note that the internal guides 52, 62 are parallel to paths 5a, 6a and may define identical or slightly different trajectories. For instance, the internal guides 52, 62 may define trajectories closer to the paths 5a, 6a near the release zone of apparatus 4, and more away from said paths 5a, 6a near the entry zone of apparatus 4, as clearly shown in Figures 3-6.

The first driving element 71 may also have the form of a boomerang. Therefore, the first internal slider 71a may be arranged at a free end of the boomerang, and the first driving element 71 may be labile constrained to a corresponding first track 50 at the other boomerang free end. Even in this case, the constraint may be obtained through a hinge.

Moreover, advantageously, the first driving element 71 may also be labile constrained with the first belt 70b at the boomerang intermediate edge. Therefore, the first driving element 71 may be dragged by the first belt 70b along the first path 5a, but it may be rotated on the first belt 70b around an axis aligned for instance with a pin of the chain defining the first belt 70b.

Moreover, the second driving element 81 may also define a boomerang shape. Therefore, the second inner slider 81a may be arranged at a boomerang free end, and the second driving element 81 may be labile constrained to a corresponding second track 60 at the other boomerang free end. Also in this case, the constraint may be done through a hinge.

Advantageously, the second driving element 81 moreover may be also labile constrained with the second belt 80b at the boomerang intermediate edge. Therefore, the second driving element 81 may be dragged by the second belt 80b along the second path 6a, but it may be rotated on the second belt 80b around an axis aligned for instance with a pin of the chain defining the second belt 80b.

In addition to the foregoing description, apparatus 4 may include further features.

For instance, the die 5 may comprise a first external guide 53. When present, the first external guide 53 extends parallel to the first path 5a outside this path 5a. Therefore, each first track 50 may include a first outer slider 50a. When present, the first outer slider 50a is labile constrained to the first external guide 53. Moreover, it may be moved along the first external guide 53.

In the same way, the counterdie 6 may comprise a second external guide 63. When present, the second external guide 63 extends parallel to the second path 6a but outside it. Therefore, each second track 60 may comprise a second external slider 60a. If present, the second external slider 60a is labile constrained to the second external guide 63. Like for the internal guides 52, 62, the external guides 53, 63 may be simple trackings or lines where the external sliders 50a, 60a may be moved.

For instance, the external guides 53, 63 may be defined on lateral plates arranged sideways of the tracks 50, 60 and integral with the structural support frame of apparatus 4. These plates may be the same plates including the internal guides 52, 62, so that the lateral plates may include all the guides 52, 53, 62, 63.

The external sliders 50a, 60a may be pins or cylinders which may be inserted in the external guides 53, 63 so as to move along predetermined trajectories. It is also important to note that the external 53, 63 are parallel to paths 5a, 6a and may define identical or slightly different trajectories. For example, even the external guides 53, 63 may define trajectories closer to paths 5a, 6a near to the release zone of apparatus 4, and trajectories more off from paths 5a, 6a close to the entry zone of apparatus 4, as clearly shown in Figs. 3-6.

In conclusion, apparatus 4 may comprise motor means 9. The motor means 9 may include one or more electric rotary motors known per se. Moreover, the electric motors may be operatively connected to at least a first gear wheel 70a and a second gear wheel 80a.Therefore, they may be configured to rotate together or individually the first gear wheel 70a and the second gear wheel 80a. Therefore, one single motor may move at the same time both gear wheels 70a, 80a. However, each gear wheel 70a, 80a may be connected with a corresponding motor and moved individually.

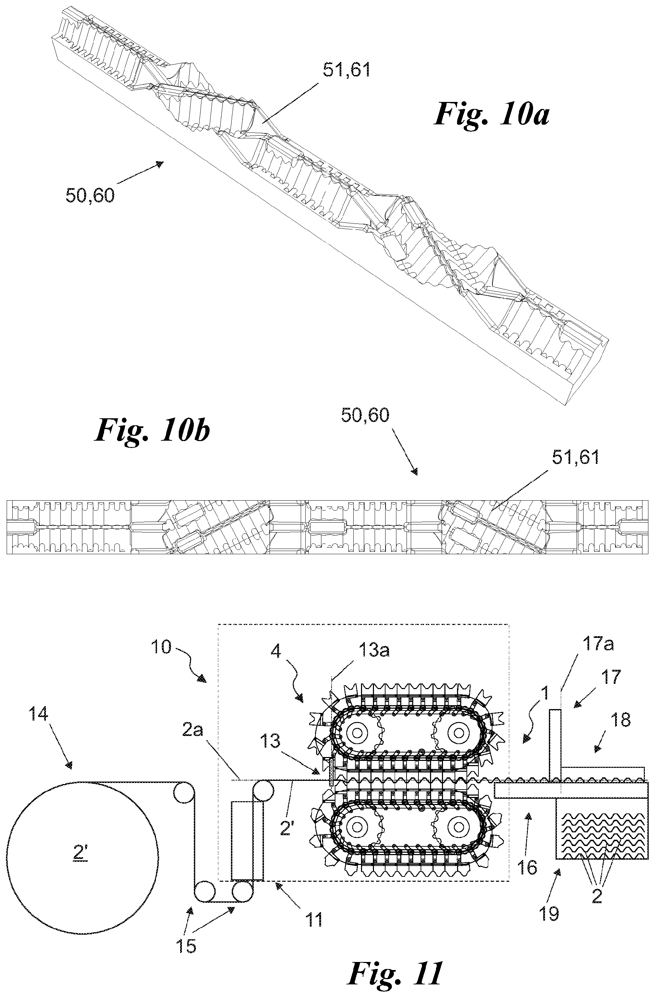

In conclusion, if the tracks 50, 60 are configured to form the band 2' as a sheet 2 to obtain panel 1, it is preferable that the tracks 50, 60 define part of the forming surfaces 51, 61 as shown in Figures 10a-10b.

In detail, it is preferable that on each track 50,60 there is a portion of forming surface 51,61 substantially countershaped in respect of a zone of panel 1 defined by two aligned first lengths T₁ adjacent to the ends and being part of a first wave form 20a, part of two second length T₂ each adjacent to a corresponding first length T₁ of the first wave form 20a, part of two second lengths T₂ of a second wave form 20a alongside the second lengths T₂ of the first wave form and connected by a first length T₁ of the second length 20a. In other words, on the portion of forming surface 51, 61 of a single track 50, 60, it is preferable that there are the shapes of the central part of a wave form 20a and of the lateral part, that is the ends 21 of another wave form 20 adjacent to the preceding one.

Therefore, the thermoforming installation 10 may comprise the particular apparatus 4, as above described in detail, or any other forming apparatus allowing to form the band 2' to obtain a deformed sheet defining a panel.

In any case, preferably the thermoforming installation 10 is particularly suitable to make the above described edges 3. Indeed, the thermoforming installation 10 comprises at least a bending apparatus 13. The bending apparatus 13 is preferably arranged upstream the forming apparatus, like for instance the apparatus 4.

Moreover, advantageously, the bending apparatus 13 comprises at least two obstacles 130. Each obstacle 130 interferes with a corresponding end 21 of band 2' advancing along the longitudinal direction 2a. Therefore, each obstacle 130 is configured to bend a corresponding rim 22 of band 2' at the corresponding end 21. In detail, each obstacle 130 is configured to define a bend up to an acute angle, that is lower than a right angle between the rim 22 and the rest of band 2', so as to allow the forming apparatus, possibly just the apparatus 4, then to press the rim 22 on the band 2' to obtain the edge 3.

Still more in detail, each obstacle 130 is preferably an elongated body. Preferably, the elongated body is extended along a central axis 130a. The central axis 130a is also transversal to band 2'. The obstacle 130 further comprises a point 131. The point 131 substantially contacts the band 2' and is advantageously positioned close to the counterdie at the entry of the forming apparatus.

If the forming apparatus has a structure like the apparatus 4, then point 131 may be positioned close to counterdie 6, and in greater detail between die 5 and counterdie 6. The term point does not mean the end, but merely a terminal more or less wide zone, sufficient to contact the band 2' and give to rim 22 the desired bending form.

Still more conveniently, the obstacles 130 are so configured, that the central axes 130a converge in the band 2'. Therefore, the central axes 130a converge in an obstruction plane 13a. The obstruction plane 13a is preferably perpendicular to the longitudinal direction 2a.

If the installation 10 comprises the forming apparatus 4, the conveyance means preferably comprise also the apparatus 4. Indeed, in view of the tracks 50, 60 moving the band 2' whilst forming it to make the sheet and then the panel, the band 2' is substantially dragged by apparatus 4 along the longitudinal direction 2a.

In addition to the foregoing description, the installation 10 may include some other contrivances.

For instance, the installation 10 may further comprise a support 16. If present, support 16 is arranged downstream the forming apparatus, possibly the apparatus 4. Therefore, support 16 is configured to support the panel, made by forming the band', along the longitudinal direction 2a. The support 16 may comprise merely a working plane or bench, on which the panel rests when coming out from the forming apparatus.

The installation 10 may also comprise a cutting station 17. When present, the cutting station 17 is preferably arranged on the support 16. Moreover, the station is configured to cut the panel along a cutting plane 17a. The cutting plane 17a is preferably perpendicular to the longitudinal direction 2a. The cutting station 17 comprises known cutting means, for instance mechanical ones, including a blade, laser or even a fluid under high pressure.

The installation may further comprise a switching station 18. The switching station 18 is preferably arranged downstream the cutting station 17. Moreover, the switching station 18 too is preferably arranged on support 16 Therefore, the switching station 18 is configured to push the panel divided up by the cutting station 17 parallel to the transversal direction 2b. In this way, the switching station clears the support 16 from the divided panel. Substantially, the panel is pushed in the air so as to fall down by gravity from support 16. Of course, it might also be possible to allow the divided panels to continue the travel beyond support 16 along the longitudinal direction 21 and fall down.

Moreover, the installation 10 may comprise one or more collection stations 19. The collection stations 19 are preferably arranged adjacent to said support 16 at said switching station 18, and they are configured to collect the divided panels removed from said support 16.

Therefore, the collection stations 19 may be mirror arranged alongside and/or in the longitudinal direction 2a. The collection stations 19 may also consist of simple containers, or even the same panels, where they fall by gravity, once they are pushed or fall from the switching station 18.

The invention comprises a novel process of forming the panel 1. The process substantially comprises at least a folding stage. The folding stage preferably precedes the stage of forming the band 2' into a sheet 2, namely the stage of causing the sheet 2 corrugated. Moreover, in the folding stage the rim 22 of sheet 2 is folded on the same sheet 2 at the ends 21 without gaps.

The invention comprises also a novel process of thermoforming the panel. Preferably, the thermoforming process is carried out with the installation 10. Thus, the thermoforming process comprises at least the heating, conveying and pressing steps. In the heating step, the band 2' is heated with a quantity of heat sufficient to make the band 2' capable of being deformed.

Then, in the conveyance step, the band 2' is conveyed to the forming apparatus along the longitudinal direction 2a through the folding station 13. In this way, the rim 22 of band 2' is folded at the ends 21 so as to define an acute angle between rim 22 and the remainder of band 2'.

Of course, if the installation 10 comprises apparatus 4, then the conveyance step is carried out also by apparatus 4 which moves the band 2' thereto in view of the movement of tracks 50, 60. In the compression step, the rim 22 is pressed on band 2 in the forming apparatus so as to obtain the edge 3.

If the forming apparatus is the apparatus 4, the band 2' is pressed along the segments s', s" between the forming surfaces 51, 61. Moreover, if the forming apparatus is configured to make a panel 1, the band 2' is corrugated in order to define sheet 2 as previously described. If the forming apparatus is apparatus 4, in this case the tracks 50, 60 may define part of the forming surfaces 51, 61 as hereinbefore described.

In conclusion, the invention comprises a novel process of forming a panel whatsoever, possibly a panel 1. Such a process is advantageously carried out by apparatus 4. The process comprises at least an introduction stage and a movement stage.

In the introduction stage, band 2' is inserted between die 5 and counterdie 6 along the longitudinal direction 2a. In detail, the band 2' is introduced until contacting the forming surfaces 51, 61. Then, the band 2' is preferably introduced up to the limit of entry of apparatus 4. Where the tracks 50, 60 mutually converge.

In the movement stage, the first tracks 50 and the second tracks 60 are simultaneously moved in a coordinated way, so as to move in turn the band 2' along the longitudinal direction 2a. At the same time, the forming surfaces 51, 61 press the band 2' thus forming it and obtaining the panel 1. When the tracks 50, 60 are configured to make panel 1, then the band 2' is corrugated thus making the sheet 2 and consequently the panel 1, as above described.

The dispersant panel 1 according to the invention attains important advantages. Indeed, the panel 1, being provided with uninterrupted edges 3, is totally devoid of microfractures, and therefore avoids to produce dangerous microplastics when used. Moreover, the panel 1, in view of its simplicity, may be produced with quick processes and without any particular dimensional limitation. In conclusion, the dispersant panel 1 may be produced in an economically advantageous way.

The invention is susceptible of variations included in the scope of the inventive concept defined in the appended claims.

## Claims

1. Dispersant panel (1) for cooling tower, comprising:
- a corrugated sheet (2) extending between a first plane (1a) and a second plane (1b) mutually parallel and defining recurrent wave forms (20) along a longitudinal direction (2a) extending along wave paths (20a) transversal to said longitudinal direction (2a);
- edges (3) extending parallel to said longitudinal direction (2a) at two opposite ends (21) of said longitudinal direction (2a), along a transversal direction (2b) perpendicular to said longitudinal direction (2a) of said sheet (2), and each defining profiles (30) for each wave form (20) recurrent parallel to said longitudinal direction (2a) on a tangential plane (3a) perpendicular to said transversal direction (2b), and **characterized in that** each of said edges (3) consists of a rim (22) of said sheet (2), folded on the same sheet (2) at said ends (21) without solution of continuity.

2. Panel (1) according to claim 1, wherein said wave path (20a) comprises a sequence of at least a first straight length (T1) parallel to said transversal direction (2b) and at least a second straight length (T2) transverse to both said transversal direction (2b) and said longitudinal direction (2a).

3. Panel (1) according to claim 3, wherein said wave path (20a) comprises a sequence between said ends (21) of a said first length (T1), a said second length (T2), a said first length (T1), a said second length (T2), and a further said first length (T1).

4. Panel (1) according to claim 3, wherein said first lengths (T1) adjacent to said ends (21) are mutually aligned.

5. Panel (1) according to any of claims 2 - 4, wherein each of said wave paths (20) comprises a first bulge (G1) extending along each said first length (T1), and a second bulge (G2) extending along each said second length (T2), said bulges (G1, G2) defining mutually opposite concavities.

6. Panel (1) according to claim 5, wherein said first bulge (G1) defines a first top (C1) extending on said first plane (1a) or on said second plane (1b) parallel to said first length (T1), and said second bulge (G2) defines a second top (C2) extending on said first plane (1a) or said second plane (1b) parallel to said second length (T2).

7. Panel (1) according to claim 6, wherein said first top (C1) and/or said second top (C2) comprise an interface surface (23).

8. Panel (1) according to any of the preceding claims, wherein each of said bulges (G1, G2) comprises a plurality of ribs (24), extending transversally to said first length (T1) and to said second length (T2), respectively.

9. Drainage pack comprising a plurality of panels (1) according to any of the preceding claims.

10. Method of forming a panel (1) according to any of the preceding claims, **characterized by** the fact of comprising the step, before forming said sheet (2) to the corrugated configuration, of folding said rim (22) of said sheet (2) on the same sheet (2) at said ends (21) without solution of continuity.

## Patentansprüche

1. Rieselplatte (1) für einen Kühlturm, die Folgendes umfasst:
- ein gewelltes Blech (2), das sich zwischen einer ersten Ebene (1a) und einer zweiten Ebene (1b) erstreckt, die zueinander parallel angeordnet sind, wobei es wiederkehrende Wellenformen (20) entlang einer Längsrichtung (2a) aufweist, welche sich entlang von Wellenverläufen (20a) erstrecken, die quer zu der genannten Längsrichtung (2a) verlaufen;
- Ränder (3), die sich an zwei einander gegenüberliegenden Enden (21) der genannten Längsrichtung (2a) parallel zu der genannten Längsrichtung (2a) entlang einer Querrichtung (2b) erstrecken, wobei die Querrichtung senkrecht zu der genannten Längsrichtung (2a) des genannten Blechs (2) verläuft, und die Ränder für jede Wellenform (20) jeweils Profile (30) ausbilden, die wiederkehrend parallel zu der genannten Längsrichtung (2a) in einer Tangentialebene (3a) verlaufen, welche senkrecht zu der genannten Querrichtung (2b) angeordnet ist, und **dadurch gekennzeichnet, dass** jeder der genannten Ränder (3) einen Randabschnitt (22) des genannten Blechs (2) bildet, welcher an den genannten Enden (21) ohne Unterbrechung der Materialkontinuität auf das gleiche Blech (2) umgefaltet wird.

2. Platte (1) nach Anspruch 1, wobei der genannte Wellenverlauf (20a) eine Folge von zumindest einem ersten geradlinigen Abschnitt (T1), der parallel zu der genannten Querrichtung (2b) verläuft, und zumindest einem zweiten geradlinigen Abschnitt (T2), der sowohl zu der genannten Querrichtung (2b) als auch zu der genannten Längsrichtung (2a) quer verläuft, aufweist.

3. Platte (1) nach Anspruch 3, wobei der genannte Wellenverlauf (20a) zwischen den genannten Enden (21) eine Folge aufweist aus einem genannten ersten Abschnitt (T1), einem genannten zweiten Abschnitt (T2), einem genannten ersten Abschnitt (T1), einem genannten zweiten Abschnitt (T2) sowie einem weiteren genannten ersten Abschnitt (T1).

4. Platte (1) nach Anspruch 3, wobei die den genannten Enden (21) benachbarten, genannten ersten Abschnitte (T1) fluchtend zueinander ausgerichtet sind.

5. Platte (1) nach einem der Ansprüche 2 bis 4, wobei jede der genannten Wellenverläufen (20) eine erste Wölbung (G1), die sich entlang jedes genannten ersten Abschnitts (T1) erstreckt, sowie eine zweite Wölbung (G2), die sich entlang jedes genannten zweiten Abschnitts (T2) erstreckt, aufweist, wobei die Wölbungen (G1, G2) einander entgegengesetzte Konkavitäten bilden.

6. Platte (1) nach Anspruch 5, wobei die genannte erste Wölbung (G1) einen ersten Scheitel (C1) bildet, der sich in der genannten ersten Ebene (1a) oder in der genannten zweiten Ebene (1b) parallel zu dem genannten ersten Abschnitt (T1) erstreckt, und die genannte zweite Wölbung (G2) einen zweiten Scheitel (C2) bildet, der sich in der genannten ersten Ebene (1a) oder in der genannten zweiten Ebene (1b) parallel zu dem genannten zweiten Abschnitt (T2) erstreckt.

7. Platte (1) nach Anspruch 6, wobei der genannte erste Scheitel (C1) und/oder der genannte zweite Scheitel (C2) eine Schnittstellenfläche (23) aufweisen.

8. Platte (1) nach einem der vorangegangenen Ansprüche, wobei jede der genannten Wölbungen (G1, G2) eine Vielzahl von Rippen (24) aufweist, die jeweils quer zu dem genannten ersten Abschnitt (T1) bzw. zu dem genannten zweiten Abschnitt (T2) verlaufen.

9. Abtropfeinsatz, der eine Vielzahl von Platten (1) nach einem der vorangegangenen Ansprüche umfasst.

10. Verfahren zum Ausbilden einer Platte (1) nach einem der vorangegangenen Ansprüche, **dadurch gekennzeichnet, dass** es den Schritt umfasst, vor der Ausbildung des genannten Blechs (2) in der gewellten Konfiguration den genannten Randabschnitt (22) des genannten Blechs (2) an den genannten Enden (21) auf das gleiche Blech (2) umzufalten, ohne die Materialkontinuität zu unterbrechen.

## Revendications

1. Panneau dispersant (1) pour une tour de refroidissement, comprenant :
- une feuille ondulée (2) s'étendant entre un premier plan (1a) et un second plan (1b) parallèles l'un à l'autre et définissant des formes d'ondes récurrentes (20) le long d'une direction longitudinale (2a) s'étendant le long de trajets d'ondes (20a) transversaux à ladite direction longitudinale (2a) ;
- des bords (3) s'étendant parallèlement à ladite direction longitudinale (2a) au niveau de deux extrémités opposées (21) de ladite direction longitudinale (2a), le long d'une direction transversale (2b) perpendiculaire à ladite direction longitudinale (2a) de ladite feuille (2), et chacun définissant des profils (30) pour chaque forme d'onde (20) récurrente parallèle à ladite direction longitudinale (2a) sur un plan tangentiel (3a) perpendiculaire à ladite direction transversale (2b), et **caractérisé en ce que** chacun desdits bords (3) est constitué d'un rebord (22) de ladite feuille (2), replié sur la même feuille (2) auxdites extrémités (21) sans solution de continuité.

2. Panneau (1) selon la revendication 1, dans lequel ledit trajet d'ondes (20a) comprend une séquence d'au moins une première longueur droite (T1) parallèle à ladite direction transversale (2b) et au moins une seconde longueur droite (T2) transversale à la fois à ladite direction transversale (2b) et à ladite direction longitudinale (2a).

3. Panneau (1) selon la revendication 3, dans lequel ledit trajet d'ondes (20a) comprend une séquence entre lesdites extrémités (21) de ladite première longueur (T1), ladite seconde longueur (T2), ladite première longueur (T1), ladite seconde longueur (T2) et ladite première longueur supplémentaire (T1).

4. Panneau (1) selon la revendication 3, dans lequel lesdites premières longueurs (T1) adjacentes auxdites extrémités (21) sont alignées les unes avec les autres.

5. Panneau (1) selon l'une quelconque des revendications 2 à 4, dans lequel chacun desdits trajets d'ondes (20) comprend une première protubérance (G1) s'étendant le long de chaque première longueur (T1), et une seconde protubérance (G2) s'étendant le long de chaque seconde longueur (T2), lesdites protubérances (G1, G2) définissant des concavités mutuellement opposées.

6. Panneau (1) selon la revendication 5, dans lequel ladite première protubérance (G1) définit un premier sommet (C1) s'étendant sur ledit premier plan (1a) ou sur ledit second plan (1b) parallèle à ladite première longueur (T1), et ladite seconde protubérance (G2) définit un second sommet (C2) s'étendant sur ledit premier plan (1a) ou sur ledit second plan (1b) parallèle à ladite seconde longueur (T2).

7. Panneau (1) selon la revendication 6, dans lequel ledit premier sommet (C1) et/ou ledit second sommet (C2) comprennent une surface d'interface (23).

8. Panneau (1) selon l'une quelconque des revendications précédentes, dans lequel chacune desdites protubérances (G1, G2) comprend une pluralité de nervures (24), s'étendant transversalement, respectivement, à ladite première longueur (T1) et à ladite seconde longueur (T2).

9. Bloc de drainage comprenant une pluralité de panneaux (1) selon l'une quelconque des revendications précédentes.

10. Procédé de formation d'un panneau (1) selon l'une quelconque des revendications précédentes, **caractérisé en ce qu'**il comprend l'étape, avant le formage de ladite feuille (2) en configuration ondulée, consistant à replier ledit rebord (22) de ladite feuille (2) sur la même feuille (2) auxdites extrémités (21) sans solution de continuité.
